# FASCICULE DE BREVET EUROPEEN

(11) **EP 2 878 908 B1**
(45) Date de publication et mention de la délivrance du brevet: **12.10.2016**
(21) Numéro de dépôt: 14195511.2
(22) Date de dépôt: 28.11.2014
(51) Int. Cl.: F24F 12/00, F28D 9/00, F28D 21/00

(54) **Installation de traitement d'air comprenant un échangeur air/air à double flux**
Luftaufbereitungsanlage, die einen Luft-Doppelluftstrom-Tauscher umfasst
Air purifier unit including a dual-flow air/air exchanger

(30) Priorité: 28.11.2013 FR 1361808
(43) Date de publication de la demande: 03.06.2015
(73) Titulaire: ELYT 3, 01360 Beligneux (FR)
(72) Inventeur: Rigaud, Franck, 01600 Reyrieux (FR)
(74) Mandataire: Lavoix

(56) Documents cités:
- WO-A1-2013/091099
- DE-U1-202007 012 261
- FR-A1- 2 961 891

## Description

L'invention concerne une installation de traitement d'air comprenant un échangeur air/air à double flux à contre-courant.

FR 2 961 891 qui appartient à l'état de la technique divulgue: une installation de traitement d'air incluant un échangeur air/air à double flux à contre-courant comportant un premier réseau de canaux orientés selon un axe longitudinal de l'échangeur dans lequel passe un premier flux d'air selon une première direction, et un second réseau de canaux orientés selon l'axe longitudinal de l'échangeur selon une seconde direction opposée à la première direction, dans lequel passe un second flux d'air, le premier réseau de canaux comportant des colonnes ou des rangées de canaux adjacents, les colonnes ou les rangées du premier des réseaux de canaux étant séparées les unes des autres par les espaces du second réseau de canaux, l'installation comprenant une canalisation d'entrée d'air extrait reliée à une entrée du second flux d'air dans l'échangeur et une canalisation de sortie d'air extrait reliée à une sortie du second flux d'air de l'échangeur, cette installation étant telle que l'échangeur comprend des moyens d'obturation totale ou partielle de l'entrée du second flux d'air dans l'échangeur, et en ce qu'une ouverture séparant les canalisations d'entrée et de sortie permet le passage du flux d'air extrait en dehors de l'échangeur lorsque l'entrée du second flux d'air dans l'échangeur est obturée. Les échangeurs air/air à double flux à contre-courant connus, sont généralement équipés de plaques comprenant des alvéoles parallèles, dans lesquels circule un flux d'air selon une direction longitudinale de l'échangeur dans un premier sens. Entre ces plaques, qui sont positionnées parallèlement les unes aux autres, se trouvent des espaces dans lesquels s'écoule un second flux d'air selon la direction longitudinale dans le sens opposé au premier flux d'air. Un tel arrangement permet un échange thermique à contre-courant entre les deux flux d'air.

Cette technologie présente plusieurs désavantages : les échangeurs composés de plaques de grande longueur sont susceptibles de se déformer car leur résistance aux efforts perpendiculaires aux plaques et à la torsion, selon l'axe longitudinal des plaques, est faible du fait de leur structure et des matériaux employés, généralement des métaux légers ou des matières plastiques. Lorsque des dépressions importantes surviennent entre les deux flux passant dans l'échangeur, les plaques peuvent se déformer, voire se coller l'une à l'autre, ce qui provoque des pertes de charge, jusqu'à suppression du flux d'air concerné. En outre, l'homogénéité de la répartition des échanges thermiques dans de tels échangeurs n'est pas optimale.

L'invention propose une nouvelle installation de traitement d'air comprenant un échangeur air/air à contre-courant, dont la structure permet un fonctionnement différent en fonction des conditions de température.

A cet effet l'invention concerne une installation de traitement d'air incluant un échangeur air/air à double flux à contre-courant comportant un premier réseau de canaux orientés selon un axe longitudinal de l'échangeur dans lequel passe un premier flux d'air selon une première direction, et un second réseau de canaux orientés selon l'axe longitudinal de l'échangeur selon une seconde direction opposée à la première direction, dans lequel passe un second flux d'air, chacun des réseaux de canaux comportant des colonnes ou des rangées de canaux adjacents, les colonnes ou les rangées d'un des réseaux de canaux étant séparées les unes des autres par les colonnes ou les rangées de l'autre réseau de canaux, la section transversale des canaux du premier réseau de canaux et la section transversale des canaux du second réseau de canaux étant égales, l'installation comprenant une canalisation d'entrée d'air extrait reliée à une entrée du second flux d'air dans l'échangeur et une canalisation de sortie d'air extrait reliée à une sortie du second flux d'air de l'échangeur. Cette installation est caractérisée en ce que l'échangeur comprend des moyens d'obturation totale ou partielle de l'entrée du second flux d'air dans l'échangeur, et en ce qu'une ouverture ménagée dans une paroi séparant les canalisations d'entrée et de sortie permet le passage du flux d'air extrait en dehors de l'échangeur lorsque l'entrée du second flux d'air dans l'échangeur est obturée.

Grâce à l'invention, l'installation peut être contrôlée de manière à mettre en oeuvre des fonctionnements plus adaptés en fonction des conditions de température, et plus économiques en supprimant les échanges thermiques dans l'échangeur à double flux sans ajouter de compartiment à côté ou dans le prolongement de l'échangeur, au contraire des échangeurs de l'état de la technique.

Selon des aspects avantageux mais non obligatoires de l'invention, une telle installation peut incorporer une ou plusieurs des caractéristiques suivantes, prises dans toute combinaison techniquement admissible :
- Les moyens d'obturation totale ou partielle de l'entrée du second flux d'air dans l'échangeur comprennent un volet monté pivotant par rapport à l'échangeur et apte à masquer l'entrée du second flux d'air dans l'échangeur.
- Le volet, en position ouverte, obture l'ouverture de communication des canalisations d'entrée et de sortie du flux d'air extrait.
- La section transversale des canaux des premier et second réseaux de canaux est de la forme d'un rectangle.
- A l'exception des canaux situés sur une face latérale de l'échangeur, chaque canal du premier réseau de canaux comprend une face d'échange thermique avec quatre canaux du second réseau de canaux.
- La section transversale des canaux des premier et second réseaux de canaux est de la forme d'un parallélogramme.
- Les canaux d'un même réseau de canaux sont superposés les uns aux autres par une arête commune.
- Les canaux des premier et second réseaux de canaux ont une section transversale de forme hexagonale.
- Les canaux d'un même réseau de canaux sont superposés les uns aux autres par une face commune.
- Les parois des canaux comportent des ondulations parallèles entre elles et perpendiculaires à l'axe longitudinal de l'échangeur.

L'invention sera mieux comprise et d'autres avantages de celle-ci apparaitront plus clairement à la lumière de la description qui va suivre d'un échangeur et d'un procédé de fabrication conformes à l'invention, faite à titre d'exemple non limitatif en référence aux dessins annexés dans lesquels :
- la figure 1 est une vue schématique d'une installation de traitement d'air conforme à l'invention, dans une première configuration de fonctionnement ;
- la figure 2 est une vue similaire à la figure 1, lorsque l'installation est dans une seconde configuration de fonctionnement ;
- la figure 3 est une vue schématique d'une partie d'un échangeur appartenant à l'installation de la figure 1 ;
- la figure 4 est une vue d'une étape d'assemblage d'une partie de l'échangeur de la figure 3 ;
- la figure 5 est une vue en perspective schématique d'une variante de l'échangeur de la figure 3 ;
- la figure 6 est une vue à plus grande échelle du détail VI à la figure 5 ;
- la figure 7 est une vue similaire à la figure 5, d'une seconde variante de l'échangeur des figures 5 et 6 ;
- la figure 8 est une vue similaire à la figure 6, d'une seconde variante de l'échangeur des figures 5 et 6 ;
- la figure 9 est une vue d'un échangeur appartenant à une installation conforme à un second mode de réalisation d'invention;
- la figure 10 est une vue en perspective d'une partie d'une troisième variante de l'échangeur de la figure 3 ;
- la figure 11 est une vue en perspective de la structure de réseaux de canaux appartenant à l'échangeur de la figure 10.

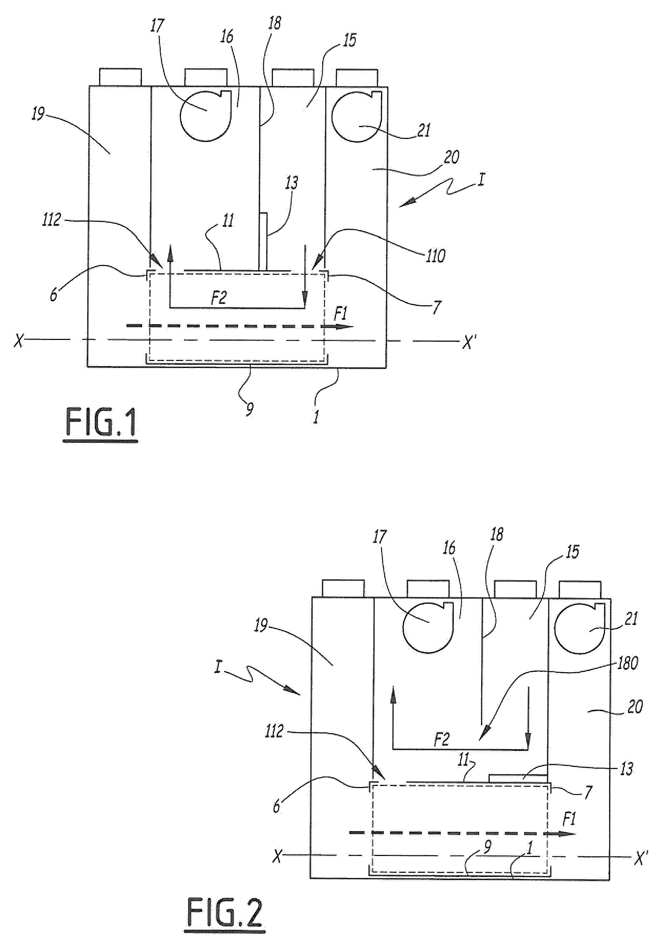

Une installation de traitement d'air I est représentée sur les figures 1 et 2. Cette installation I comprend un échangeur 1 qui comprend un premier réseau de canaux 3, dans lesquels s'écoule un premier flux d'air représenté par les flèches F1. Les canaux 3 définissent une direction longitudinale X-X' de l'échangeur 1.

L'échangeur 1 comprend également un second réseau de canaux 5, dans lesquels circule un second flux d'air, représenté par les flèches F2, qui s'écoule dans un sens opposé au flux d'air F1. Des échanges thermiques à contre-courant ont lieu entre les flux d'air F1 et F2. Sur les figures 1 et 2, les flux d'air F1 et F2 sont représentés comme circulant dans le même plan. En réalité, les flux d'air F1 et F2 circulent dans des plans décalés.

L'échangeur 1 a une forme globalement parallélépipédique et comporte deux faces latérales 6 et 7 perpendiculaires à l'axe X-X', une face inférieure 9 et une face supérieure 11. Le flux d'air F1 entre dans l'échangeur 1 par la face latérale 6 et en sort par la face latérale 7. Le flux d'air F2 entre dans l'échangeur 1 par une ouverture 110 de la face supérieure 11, située du côté de la face latérale 7, et en sort par une ouverture de sortie 112 de la face supérieure 11, située du côté de la face latérale 6.

Tandis que le flux d'air F1 suit une trajectoire sensiblement rectiligne selon l'axe X-X' dans l'échangeur 1, le flux d'air F2 suit, après son entrée dans l'échangeur 1, une trajectoire rectiligne perpendiculaire à l'axe X-X' puis subit une inflexion et adopte une trajectoire rectiligne orientée selon l'axe X-X' à l'opposé du flux d'air F1 dans la partie centrale de l'échangeur 1, dans lequel des échanges thermiques à contre-courant ont lieu. Ensuite, lorsque le flux d'air F2 atteint l'extrémité opposée de l'échangeur 1, le flux d'air F2 subit une nouvelle inflexion qui l'oriente selon une trajectoire perpendiculaire à l'axe X-X' vers l'ouverture 110.

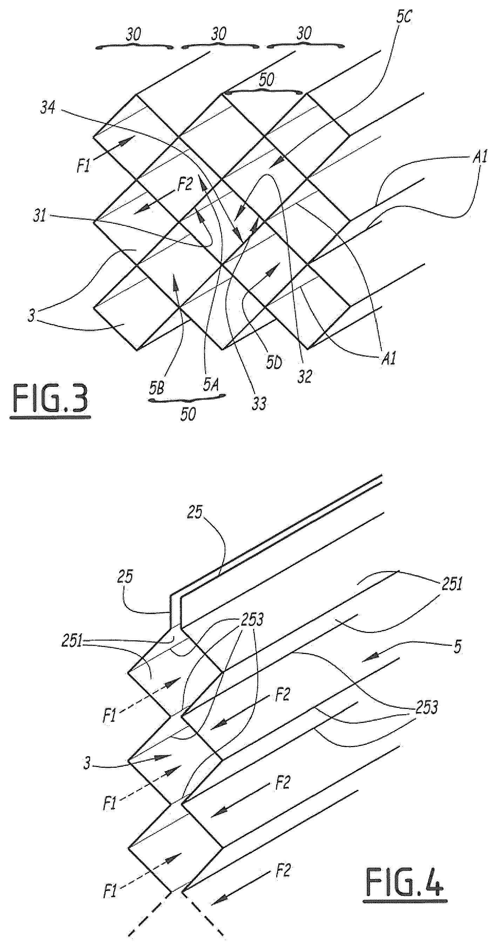

Comme visible à la figure 3, chacun des premier et second réseaux de canaux comprend respectivement des colonnes 30 et 50 de canaux 3 et 5 juxtaposés les uns aux autres. Les colonnes 30 sont séparées les unes des autres par les colonnes 50. Le second réseau de canaux 5 est placé de manière à permettre des échanges thermiques entre le premier flux d'air F1 et le second flux d'air F2.

Selon l'invention, la section transversale des canaux du premier réseau de canaux 3 et la section transversale des canaux 5 du second réseau de canaux sont égales.Une telle structure permet d'augmenter les surfaces d'échange thermique et d'améliorer la résistance mécanique des réseaux de canaux 3 et 5 à la déformation transversale sous l'effet de dépressions.

A l'exception des canaux situés sur une face latérale de l'échangeur 1, chaque canal 3 du premier réseau de canaux comprend respectivement une face 31, 32, 33, 34 d'échanges thermiques avec quatre canaux 5A, 5B, 5C, 5D du second réseau de canaux qui l'entourent. Ceci permet de maximiser les échanges thermiques entre les flux d'air F1 et F2.

Les parois des canaux 3 et 5 des premier et second réseaux de canaux comportent des ondulations non représentées, qui sont parallèles entre elles et perpendiculaires à l'axe longitudinal X-X'. Ces ondulations permettent d'augmenter la surface d'échange thermique des canaux 3 et 5.La section transversale des canaux 3 du premier réseau de canaux et des canaux 5 du second réseau de canaux est de la forme d'un parallélogramme. Dans un tel cas, les canaux 3 ou 5 d'un même réseau de canaux sont superposés les uns aux autres selon un axe Z-Z' perpendiculaire à l'axe X-X', le long d'une arête commune A1.

De préférence, comme cela est représenté à la figure 4, les canaux 3 et 5 sont fabriqués par l'assemblage de plaques embouties 25. Les plaques 25 sont représentées éloignées l'une de l'autre sur la figure 3 avant assemblage, par exemple par soudage. Chaque plaque 5 est identique, ce qui permet une standardisation du procédé de fabrication. Les plaques embouties 25 comprennent une succession de parois 251 inclinées alternativement pour former deux par deux la moitié d'un canal 3 ou 5. Les plaques 25 sont assemblées les unes aux autres par leurs arêtes 253 de manière à fermer les canaux 3 ou 5.

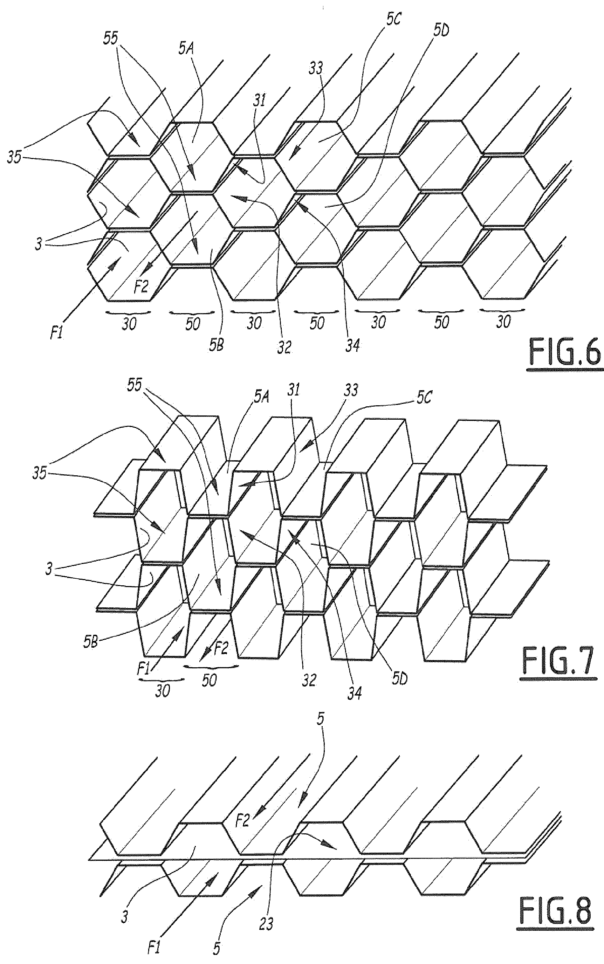

Selon une variante de l'invention représentée sur les figures 6 à 8, les canaux 3 et 5 des premier et second réseaux de canaux ont une section transversale de forme hexagonale. Dans un tel cas, les canaux 3 et 5 des premiers et seconds réseaux de canaux sont superposés les uns aux autres par une face commune respective 35 ou 55.

La section hexagonale des canaux permet, pour une même largeur de canal, de présenter des faces de longueur optimale, ce qui offre une surface d'échange optimale. En outre, les canaux de forme hexagonale offrent de meilleures propriétés de résistance mécanique que, par exemple, des canaux à section carrée.

La section hexagonale des canaux permet également d'obtenir un écoulement laminaire des flux d'air dans l'échangeur. Un écoulement laminaire diminue les pertes de charge et évite la nécessité de réaliser des états de surfaces de rugosité faible sur les surfaces internes des canaux.

Dans le cas où les canaux 3 et 5 des premier et second réseaux de canaux ont une section transversale hexagonale, les canaux 3 et 5 peuvent être fabriqués à partir d'une structure en nids d'abeilles dans laquelle des ouvertures 57 de passage du second flux d'air F2 sont réalisées. En effet, comme le second flux d'air entre et sort des canaux 5 selon une direction transversale, il est nécessaire de percer une ouverture latérale 57 dans chaque canal 5. Les ouvertures 57 sont réalisées de préférence par usinage sur les faces communes 55, et sur les faces supérieures 58 des canaux 5 situés au voisinage de la face supérieure 11.

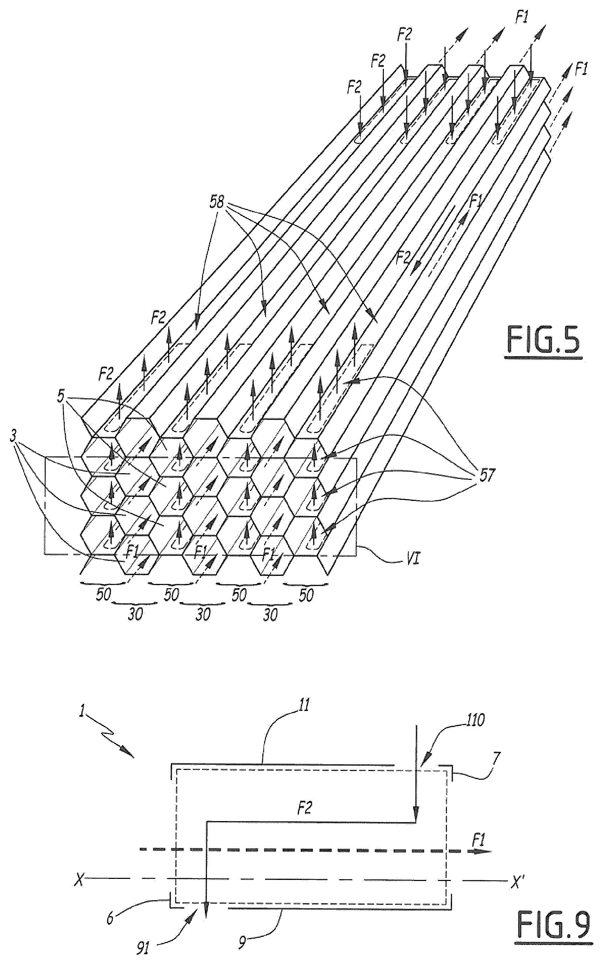

Les canaux 3 et 5 sont représentés sur les figures 5 et 6 comme ayant une section transversale hexagonale régulière. En variante représentée à la figure 7, les canaux 3 et 5 peuvent avoir une section transversale hexagonale non régulière.

Selon une variante représentée à la figure 8, les premier et second réseaux de canaux 3 et 5 sont renforcés par des plaques transversales 23 séparant les canaux 3 et 5 en leur milieu. Ces plaques 23 augmentent la rigidité transversale des canaux 3 et 5.

Selon un mode de réalisation non représenté de l'invention, les canaux 3 et 5 peuvent être fabriqués en un matériau plastique thermoformable.

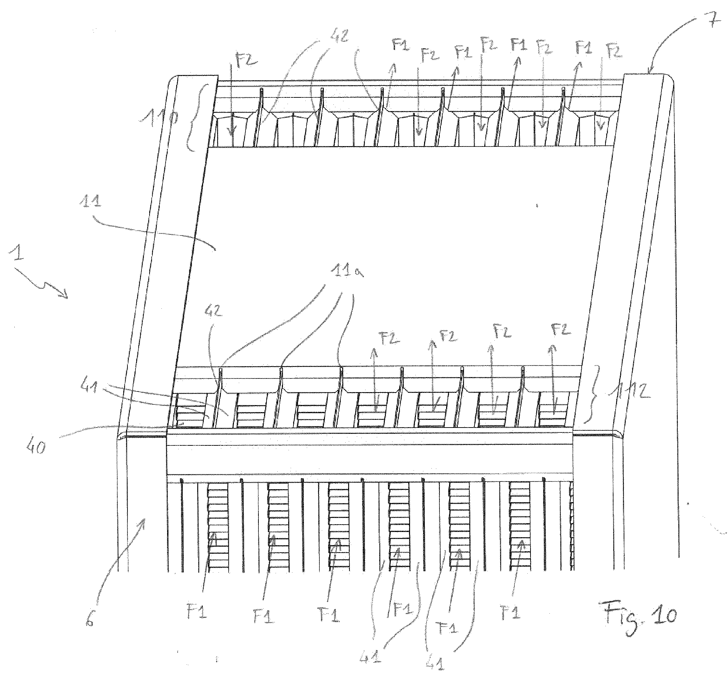

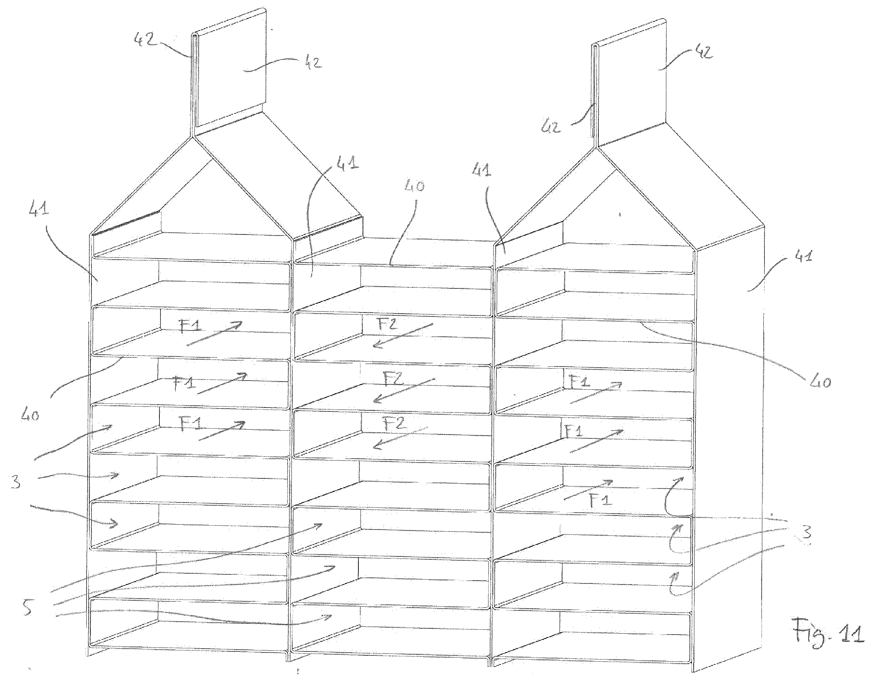

Selon une troisième variante représentée aux figures 10 et 11, la section transversale des canaux 3 et 5 peut être rectangulaire. Les canaux 3 et 5 sont formés par des profilés ondulés 40 à angles droits montés entre des plaques parallèles verticales 41 fixées deux par deux à leurs extrémités 42. Les extrémités 42 sont insérées dans les rainures 11a de la face supérieure 11 pour permettre la fixation des plaques 41.

Les plaques 41 s'étendent au-delà des profilés ondulés 40, de telle manière que le second flux d'air F2 puisse entrer par l'ouverture 110 et sortir par l'ouverture 112 dans le second réseau de canaux 5, comme cela est représenté à la figure 10.

La jointure deux à deux des plaques 41 par leur extrémités 42 permet la circulation du premier flux d'air F1 entre deux plaques 41 fixées l'une à l'autre entre les faces latérales 6 et 7 de l'échangeur 1.

Conformément à l'invention, l'échangeur 1 comprend des moyens d'obturation totale ou partielle de l'ouverture d'entrée 110 du second flux d'air F2 dans l'échangeur 1. Ces moyens comprennent par exemple un volet 13 monté pivotant par rapport à la face supérieure 11 de l'échangeur 1 et apte à masquer l'ouverture d'entrée 110.

Comme cela est visible aux figures 1 et 2, l'installation de traitement d'air I comprend une canalisation d'entrée d'air extrait 15, raccordé à l'ouverture d'entrée d'air 110, dans laquelle circule le flux d'air F2, qui est un flux d'air porteur d'énergie calorifique extrait d'une pièce d'un local. L'installation de traitement d'air I comporte également une canalisation de sortie d'air extrait 16, raccordée à la sortie d'air 112. Un ventilateur 17 aspire le second flux d'air F2 par la canalisation de sortie 16.

L'installation de traitement d'air I inclut également des canalisations d'entrée et de sortie d'air neuf 19 et 20 respectivement raccordées aux ouvertures des faces latérales 6 et 7 et dans lesquelles passe le premier flux d'air F1, qui est un flux d'air neuf capté à l'extérieur d'un bâtiment dans lequel l'installation de traitement d'air I est installée ou issue d'un système de recyclage d'air. Un ventilateur 21 aspire le premier flux d'air F1 par la canalisation de sortie 20.

Dans sa position de la figure 1, le volet 13 est relevé et l'ouverture 110 est passante, ce qui permet la circulation du flux d'air F2 dans l'échangeur 1, entre la canalisation d'entrée 15 et la canalisation de sortie 16.

Dans sa position de la figure 2, le volet 13 est rabattu contre la face supérieure 11 de manière qu'il masque l'ouverture d'entrée 110 du second flux d'air F2 dans l'échangeur 1.

Les canalisations d'entrée et de sortie 15 et 16 sont séparées par une cloison 18 dans laquelle est ménagée une ouverture 180 permettant le passage de l'air entre la canalisation d'entrée 15 et la canalisation de sortie 16. Dans la position fermée du volet 13, dans laquelle le flux d'air F2 ne peut pas entrer dans l'échangeur 1, le flux d'air F2 passe directement dans la canalisation de sortie 16 par l'ouverture 180, sans passer dans l'échangeur 1. Il n'y a donc pas d'échange thermique entre le flux d'air F1 et le flux d'air F2 dans l'échangeur 1. Dans la position ouverte du volet 13, le volet 13 obstrue l'ouverture 180 de sorte que le flux d'air F2 passe obligatoirement dans l'échangeur 1.

Le volet 13 permet de supprimer temporairement les échanges thermiques dans l'échangeur 1, notamment dans le cas où, en été, il n'est pas nécessaire de chauffer un air neuf avec de la chaleur contenue dans un air extrait, ou en hiver, pour limiter les risques de givrage.

L'échangeur 1 ne nécessite pas l'ajout d'un compartiment à côté ou dans le prolongement de l'échangeur. L'installation de traitement d'air I n'est donc pas élargie et l'espace disponible au-dessus de l'échangeur 1 est avantageusement utilisé pour dériver le flux d'air extrait F2.

Cela permet un fonctionnement spécifique, dit de sur-ventilation nocturne, ou « free cooling » consistant à faire passer dans l'échangeur 1 un air neuf frais à un débit important, notamment en période estivale lorsque la température de l'air extérieure baisse pendant la nuit, pour rafraîchir l'intérieur d'habitations. Dans un tel cas, la taille du volet 13 peut être ajustée afin de véhiculer, par l'ouverture 180, plusieurs fois le débit nominal de traitement d'air de l'échangeur 1 pour un rafraichissement optimal.

Un second mode de réalisation de l'invention est représenté à la figure 9. Ce mode de réalisation diffère du premier mode de réalisation par le fait que le flux d'air F2 sort de l'échangeur 1 par une ouverture 91 de la face inférieure 9 située du côté de la face latérale 6.

Selon une variante non représentée de l'invention, les colonnes de canaux sont disposées horizontalement et forment des rangées.

## Revendications

1. Installation de traitement d'air incluant un échangeur air/air (1) à double flux à contre-courant comportant un premier réseau de canaux (3) orientés selon un axe longitudinal (X-X') de l'échangeur (1) dans lequel passe un premier flux (F1) d'air selon une première direction, et un second réseau de canaux (5) orientés selon l'axe longitudinal (X-X') de l'échangeur (1) selon une seconde direction opposée à la première direction, dans lequel passe un second flux d'air (F2), chacun des réseau de canaux comportant des colonnes ou des rangées (30, 50) de canaux (3, 5) adjacents, les colonnes ou les rangées (30) d'un des réseaux de canaux étant séparées les unes des autres par les colonnes ou les rangées (50) de l'autre réseau de canaux, la section transversale des canaux (3) du premier réseau de canaux et la section transversale des canaux (5) du second réseau de canaux étant égales, l'installation comprenant une canalisation (15) d'entrée d'air extrait reliée à une entrée (110) du second flux d'air (F2) dans l'échangeur (1) et une canalisation de sortie (16) d'air extrait reliée à une sortie (112) du second flux d'air (F2) de l'échangeur (1), cette installation étant telle que l'échangeur comprend des moyens (13) d'obturation totale ou partielle de l'entrée (110) du second flux d'air (F2) dans l'échangeur (1), et en ce qu'une ouverture (180) ménagée dans une paroi (18) séparant les canalisations d'entrée (15) et de sortie (16) permet le passage du flux d'air extrait (F2) en dehors de l'échangeur (1) lorsque l'entrée du second flux d'air dans l'échangeur (1) est obturée.

2. Installation selon la revendication 1, **caractérisée en ce que** les moyens (13) d'obturation totale ou partielle de l'entrée (110) du second flux d'air (F2) dans l'échangeur (1) comprennent un volet (13) monté pivotant par rapport à l'échangeur (1) et apte à masquer l'entrée (110) du second flux d'air (F2) dans l'échangeur (1).

3. Installation selon la revendication 2, **caractérisée en ce que** le volet (13), en position ouverte, obture l'ouverture (180) de communication des canalisations d'entrée (15) et de sortie (16) du flux d'air extrait.

4. Installation selon l'une des revendications précédentes, **caractérisée en ce que** la section transversale des canaux (3, 5) des premier et second réseaux de canaux est de la forme d'un rectangle.

5. Installation selon l'une des revendications précédentes, **caractérisée en ce qu'**à l'exception des canaux situés sur une face latérale de l'échangeur (1), chaque canal (3) du premier réseau de canaux comprend une face (30, 31, 32, 33) d'échange thermique avec quatre canaux (5A, 5B, 5C, 5D) du second réseau de canaux.

6. Installation selon l'une des revendications précédentes, **caractérisée en ce que** la section transversale des canaux (3) des premier et second réseaux de canaux (5) est de la forme d'un parallélogramme.

7. Installation selon la revendication 6, **caractérisée en ce que** les canaux (3, 5) d'un même réseau de canaux sont superposés les uns aux autres par une arête (A1) commune.

8. Installation selon l'une des revendications 1 à 5, **caractérisé en ce que** les canaux (3, 5) des premier et second réseaux de canaux ont une section transversale de forme hexagonale.

9. Installation selon la revendication 8, **caractérisée en ce que** les canaux (3, 5) d'un même réseau de canaux sont superposés les uns aux autres par une face commune (35, 55).

10. Installation selon l'une des revendications précédentes, **caractérisée en ce que** les parois des canaux (3, 5) comportent des ondulations parallèles entre elles et perpendiculaires à l'axe longitudinal (X-X') de l'échangeur (1).

## Patentansprüche

1. Luftaufbereitungsanlage mit einem Doppelluftstrom-Gegenstrom-Tauscher (1) umfassend ein zur Längsachse (X-X') des Tauschers (1) ausgerichtetes erstes Leitungsnetz (3), in dem ein erster Luftstrom (F1) entlang einer ersten Richtung fließt, und ein zur Längsachse (X-X') des Tauschers (1) ausgerichtetes zweites Leitungsnetz (5), welches entlang einer der ersten Richtung entgegengesetzten zweiten Richtung, in der ein zweiter Luftstrom (F2) fließt, verläuft, wobei jedes der Leitungsnetze in Spalten oder Reihen (30, 50) angeordnete benachbarte Leitungen (3. 5) umfasst, wobei die Spalten oder Reihen (30) des einen Leitungsnetzes durch die Spalten oder Reihen (50) des anderen Leitungsnetzes voneinander getrennt sind, wobei der Leitungsquerschnitt (3) des ersten Leitungsnetzes und der Leitungsquerschnitt (5) des zweiten Leitungsnetzes gleich sind, wobei die Anlage eine im Tauscher (1) mit einem Einlass (110) des zweiten Luftstroms (F2) verbundene Ablufteinlassleitung (15) und eine im Tauscher (1) mit einem Auslass (112) des zweiten Luftstroms (F2) verbundene Abluftauslassleitung (16) umfasst, wobei die Anlage derart ausgebildet ist, dass der Tauscher Mittel (13) zur kompletten oder teilweisen Abdichtung des Einlasses (110) des zweiten Luftstroms (F2) im Tauscher (1) umfasst, und eine in einer die Einlassleitung (15) und die Auslassleitung (16) trennenden Wand (18) ausgebildete Öffnung (180) den Durchfluss des Abluftstroms (F2) außerhalb des Tauschers (1) ermöglicht, wenn der Einlass des zweiten Luftstroms im Tauscher (1) verschlossen ist.

2. Anlage nach Anspruch 1, **dadurch gekennzeichnet, dass** die Mittel (13) zur kompletten oder teilweisen Abdichtung des Einlasses des zweiten Luftstroms (F2) im Tauscher (1) eine gegenüber dem Tauscher (1) schwenkbar gelagerte Klappe (13) zum Verdecken des Einlasses (110) des zweiten Luftstroms (F2) im Tauscher (1) umfassen.

3. Anlage nach Anspruch 2, **dadurch gekennzeichnet, dass** die Klappe (13) in einer offenen Stellung die Öffnung (180) zur Verbindung der Ablufteinlassleitung (15) und der Abluftauslassleitung (16) verschließt.

4. Anlage nach einem der vorangehenden Ansprüche, **dadurch gekennzeichnet, dass** der Querschnitt der Leitungen (3, 5) des ersten und zweiten Leitungsnetzes in Form eines Rechtecks ausgebildet ist.

5. Anlage nach einem der vorangehenden Ansprüche, **dadurch gekennzeichnet, dass**, mit Ausnahme der auf einer seitlichen Fläche des Tauschers (1) angeordneten Leitungen, jede Leitung (3) des ersten Leitungsnetzes eine Fläche (30, 31, 32, 33) zum Wärmeaustausch mit vier Leitungen (5A, 5B, 5C, 5D) des zweiten Leitungsnetzes umfasst.

6. Anlage nach einem der vorangehenden Ansprüche, **dadurch gekennzeichnet, dass** der Querschnitt der Leitungen (3,5) des ersten und zweiten Leitungsnetzes in Form eines Parallelogramms ausgebildet ist.

7. Anlage nach Anspruch 6, **dadurch gekennzeichnet, dass** die Leitungen (3, 5) ein und desselben Leitungsnetzes mit einer gemeinsamen Kante (A1) übereinander gelagert sind.

8. Anlage nach einem der Ansprüche 1 bis 5, **dadurch gekennzeichnet, dass** die Leitungen (3, 5) des ersten und zweiten Leitungsnetzes einen sechseckigen Querschnitt aufweisen.

9. Anlage nach Anspruch 8, **dadurch gekennzeichnet, dass** die Leitungen (3, 5) ein und desselben Leitungsnetzes mit einer gemeinsamen Fläche (35, 55) übereinander gelagert sind.

10. Anlage nach einem der vorangehenden Ansprüche, **dadurch gekennzeichnet, dass** die Wände der Leitungen (3, 5) zueinander parallele und zur Längsachse (X-X') des Tauschers (1) senkrecht ausgebildete Wellen umfassen.

## Claims

1. Air purifier unit including a counter-current dual-flow air/air exchanger (1) comprising a first system of channels (3), oriented along a longitudinal axis (X-X') of the exchanger (1), through which there passes a first airflow (F1) in a first direction, and a second system of channels (5), oriented along the longitudinal axis (X-X') of the exchanger (1) in a second direction opposite to the first direction, through which there passes a second airflow (F2), each of the systems of channels comprising columns or rows (30, 50) of adjacent channels (3, 5), the columns or rows (30) of one of the systems of channels being separated from one another by the columns or rows (50) of the other system of channels, the cross-section of the channels (3) of the first system of channels and the cross-section of the channels (5) of the second system of channels being the same, the unit comprising an extracted air inlet pipe (15) connected to an inlet (110) for the second airflow (F2) into the exchanger (1) and an extracted air outlet pipe (16) connected to an outlet (112) for the second airflow (F2) from the exchanger (1), said unit being such that the exchanger comprises means (13) for completely or partially closing the inlet (110) for the second airflow (F2) into the exchanger (1), and that an opening (180) formed in a wall (18) separating the inlet pipe (15) and the outlet pipe (16) allows the extracted airflow (F2) to pass out of the exchanger (1) when the inlet for the second airflow into the exchanger (1) is closed,

2. Unit according to claim 1, **characterised in that** the means (13) for completely or partially closing the inlet (110) for the second airflow (F2) into the exchanger (1) comprise a flap (13) which is pivotably mounted relative to the exchanger (1) and is capable of concealing the inlet (110) for the second airflow (F2) into the exchanger (1).

3. Unit according to claim 2, **characterised in that** the flap (13), in the open position, closes the communication opening (180) of the inlet pipe (15) and the outlet pipe (16) for the extracted airflow.

4. Unit according to any one of the preceding claims, **characterised in that** the cross-section of the channels (3, 5) of the first and second systems of channels has the shape of a rectangle.

5. Unit according to any one of the preceding claims, **characterised in that**, apart from the channels situated on a side face of the exchanger (1), each channel (3) of the first system of channels comprises a face (30, 31, 32, 33) for heat exchange with four channels (5A, 5B, 5C, 5D) of the second system of channels.

6. Unit according to any one of the preceding claims, **characterised in that** the cross-section of the channels (3) of the first and second systems of channels (5) has the shape of a parallelogram.

7. Unit according to claim 6, **characterised in that** the channels (3, 5) of the same system of channels are superposed one on top of the other by a common edge (A1).

8. Unit according to any one of claims 1 to 5, **characterised in that** the channels (3, 5) of the first and second systems of channels have a cross-section of hexagonal shape.

9. Unit according to claim 8, **characterised in that** the channels (3, 5) of the same system of channels are superposed one on top of the other by a common face (35, 55).

10. Unit according to any one of the preceding claims, **characterised in that** the walls of the channels (3, 5) comprise undulations which are parallel to one another and perpendicular to the longitudinal axis (X-X') of the exchanger (1)
